# EUROPÄISCHE PATENTSCHRIFT

(11) **EP 1 274 366 B1**
(45) Veröffentlichungstag und Bekanntmachung des Hinweises auf die Patenterteilung: **21.11.2007**
(21) Anmeldenummer: 01938086.4
(22) Anmeldetag: 05.04.2001
(51) Int. Cl.: A61C 8/00, A61D 5/00

(54) **PFOSTENFÖRMIGES ELEMENT ZUR BESTIMMUNG DER RÄUMLICHEN POSITION, INSBESONDERE EINES IMPLANTATS**
DOWEL-SHAPED ELEMENT FOR DETERMINING SPATIAL POSITION, ESPECIALLY THAT OF AN IMPLANT
ELEMENT EN FORME DE POIN ON PERMETTANT DE DETERMINER LA POSITION SPATIALE, EN PARTICULIER D'UN IMPLANT

(30) Priorität: 19.04.2000 DE 10019331
(43) Veröffentlichungstag der Anmeldung: 15.01.2003
(73) Patentinhaber: Heraeus Kulzer GmbH, 63450 Hanau (DE)
(72) Erfinder: AUGTHUN, Michael, 45470 Mülheim (DE); PETERS, Manfred, 38302 Wolfenbüttel (DE); HASELHUHN, Klaus, 52064 Aachen (DE); SPIEKERMANN, Hubertus, 42718 Haan (DE)
(74) Vertreter: Kühn, Hans-Christian
(86) Internationale Anmeldenummer: PCT/EP2001/003859
(87) Internationale Veröffentlichungsnummer: WO 2001/080767

(56) Entgegenhaltungen:
- WO-A-99/62421
- US-A- 4 293 302
- US-A- 5 246 370
- US-A- 5 281 140
- US-A- 5 782 918

## Beschreibung

Die Erfindung betrifft eine Einrichtung, aufweisend ein Implantat, ein Stabelement und ein pfostenförmiges Element zur Bestimmung der räumlichen Position des Implantats relativ zu den dieses umgebenden Gewebestrukturen, wobei das pfostenförmige Element mit einem Aufnahmeabschnitt in eine angepaßte Aufnahmeausnehmung in dem Implantat einbringbar, darin fixierbar und wieder daraus entfernbar ist und in einer Verbindungsposition mit einem Kragabschnitt über den Öffnungsquerschnitt der Aufnahmeausnehmung vorsteht.

Im Bereich der Zahnmedizin werden derartige pfostenförmige Elemente als sogenannte Abdruckpfosten bezeichnet, mit denen beispielsweise Lage und Ausrichtung eines zuvor in einen Kieferknochen eingebrachten zahnmedizinischen Implantats bestimmt werden soll. Zu diesem Zweck wird das pfostenförmige Element mit seinem als Aufnahmeabschnitt ausgebildeten Unterteil in eine als Aufnahmeausnehmung fungierende Bohrung in dem Implantat eingesetzt und darin beispielsweise mit Hilfe einer axial durchgängigen Schraube in einer Gewindesackbohrung im Innern des Implantats fixiert. Der in dieser Verbindungsposition des pfostenförmigen Elements über den Öffnungsquerschnitt in dem Implantat vorstehende Kragabschnitt ist typischerweise mit einer Mehrzahl von Retensionen versehen, um einen möglichst innigen Formschluß zwischen dem Kragabschnitt und einer aushärtbaren Abdruckmasse herzustellen.

Unter Zuhilfenahme eines Abdrucklöffels wird der Raum um den Abdruckpfosten sowie die benachbarten Zähne herum mittels einer anfangs plastisch verformbaren Abdruckmasse ausgefüllt, wodurch sich die Zähne und der Abdruckpfosten nach Art eines Negativs abformen.

Der Abdrucklöffel weist in einem Bereich, der dem proximalen Ende des Kragabschnitts des Abdruckpfostens zugeordnet ist, eine Aussparung auf, um nach dem Aushärten der Abdruckmasse die Schraube zur Fixierung desselben wieder herausdrehen zu können. Nachdem die Fixierung des pfostenförmigen Elements in dem Implantat wieder aufgehoben ist, kann das pfostenförmige Element, das formschlüssig in die Abdruckmasse eingebettet zusammen ist, zusammen mit dieser von dem Kiefer entfernt werden.

US 4,293,302 A offenbart ein Implantat mit einem mehrschichtigen Aufbau (Abutment), das eine hohe Stabilität gewährleisten soll. US 5,782,918 A beschreibt die Verankerung eines Abutments in einem Implantat. WO 9962421 offenbart ein Abdruckpfosten mit einer in Richtung seiner Längsachse verlaufende Durchgangsöffnung.

Ein Nachteil der bekannten Abdruckpfosten ist darin zu sehen, daß deren korrekte Position in bezug auf das Implantat beim Einsetzen und vor der Abformung nicht ohne weiteres feststellbar ist. Es ist nämlich durchaus möglich, daß sich zwischen den Kontaktflächen des Abdruckpfostens und des Implantats, die bei korrekter Positionierung aneinander anliegen, beispielsweise dem Implantat benachbartes Gewebe eingeschoben hat, so daß Abdruckpfosten und Implantat nicht in die korrekte Lage zueinander gelangen können. In diesem Fall würde durch den Abdruck eine falsche Position des Abdruckpfostens festgehalten, wodurch auf eine falsche Position des Implantats geschlossen würde.

Um diese Unsicherheit zu vermeiden, wird nach einer Fixierung des Abdruckpfostens im Implantat und noch vor der Abformung die korrekte Lage des Abdruckpfostens mit Hilfe einer Röntgenaufnahme kontrolliert. Diese Röntgenaufnahme führt zum einen zur Erhöhung des Zeitaufwandes beim Einbau und damit der Kosten für ein derartiges Implantatsystem und setzt den Patienten des weiteren einer Strahlenbelastung aus, die nach heutigen Erkenntnissen möglichst minimiert werden sollte.

Der Erfindung liegt daher die Aufgabe zugrunde, ein pfostenförmiges Element zur Bestimmung der räumlichen Position, insbesondere eines Implantats, vorzuschlagen, bei dem sich die korrekte Lage des pfostenförmigen Elements in bezug auf das Implantat vor dem Abformvorgang auf einfache und zuverlässige Weise und ohne Zuhilfenahme von Röntgenstrahlung feststellen läßt.

Diese Aufgabe wird durch die Merkmale des Anspruchs 1 gelöst.

Ausgehend von einer Eirichtung mit einem pfostenförmigen Element der eingangs beschriebenen Art, wird diese Aufgabe erfindungsgemäß dadurch gelöst, daß das pfostenförmige Element eine in Richtung seiner Längsachse verlaufende Durchgangsöffnung aufweist, durch die ein Stabelement hindurchführbar ist, das mit einer distalen Anschlagfläche auf dem Grund der Aufnahmeausnehmung des Implantats in Kontakt bringbar ist.

Durch das Einführen des Stabelements an die angepaßte Durchgangsöffnung läßt sich einfach feststellen, ob das pfostenförmige Element in bezug auf das Implantat die korrekte Position besitzt. Das vorteilhafterweise länger als die Durchgangsöffnung ausgebildete Stabelement wird in die Durchgangsöffnung eingeführt, bis es mit seiner distalen Anschlagfläche in Kontakt mit einer Anschlagfläche auf dem Grund der Aufnahmeausnehmung des Implantats kommt. Da die Länge der Durchgangsöffnung durch das pfostenförmige Element bekannt ist, kann je nach der Länge des Stabelements, die von der Durchgangsöffnung aufgenommen wird, abgelesen werden, ob das pfostenförmige Element sich in der korrekten Position befindet. Läßt sich nämlich das Stabelement tiefer in die Durchgangsöffnung einschieben, als dies der korrekten Position des pfostenförmigen Elements entsprechen sollte, so erlaubt dies den Rückschluß, daß das pfostenförmige Element aufgrund irgendwelcher Umstände noch weiter von dem Implantat entfernt ist, wodurch sich beispielsweise auf eingeklemmtes Gewebe zwischen den Kontaktflächen des pfostenförmigen Elements und des Implantats schließen läßt.

Bei dem erfindungsgemäßen pfostenförmigen Element ist somit die Kontrolle auf dessen korrekte Lage allein mit Hilfe eines optischen bzw. mechanischen Hilfsmittels möglich. Es kann vollständig auf eine Röntgenkontrolle der Lage des pfostenförmigen Elements verzichtet werden, wodurch die Kosten reduziert und die Strahlenbelastung der Patienten gemindert wird.

Gemäß einer Ausgestaltung der Erfindung wird vorgeschlagen, daß die Durchgangsöffnung und die Aufnahmeausnehmung koaxial zueinander verlaufen.

Außerdem ist es vorteilhaft, wenn das Stabelement mit einem distalen Endabschnitt in eine im Querschnitt angepaßte Sacköffnung in dem Grund der Aufnahmeausnehmung einführbar ist. In diesem Fall vermittelt das Stabelement dem Verbund "pfostenförmiges Element-Implantat" eine Stabilität, die es ermöglicht, während des Formvorgangs unter Umständen auf jegliche weitere Fixierung zu verzichten.

Das Einführen des pfostenförmigen Elements wird erleichtert, wenn die Sacköffnung sich im Bereich ihres Eintrittsquerschnitts geringfügig erweitert und/oder das stabförmige Element sich in seinem distalen Endabschnitt im Durchmesser geringfügig verjüngt.

Das Ablesen der Position des Stabelements wird dadurch vereinfacht, daß die proximale Stirnfläche des pfostenförmigen Elements im rechten Winkel zu der Längsachse des Stabelements verläuft.

Außerdem ist es vorteilhaft, daß das Stabelement an seiner äußeren Mantelfläche mit einer Markierung versehen ist, die im Falle einer korrekten Position des pfostenförmigen Elements in bezug auf das Implantat und bei Kontakt der Anschlagflächen des pfostenförmigen Elements und des Implantats aneinander gerade vollständig in die Durchgangsöffnung eingetaucht ist oder sich gerade unmittelbar oberhalb des Öffnungsquerschnitts der Durchgangsöffnung befindet.

Eine besonders vorteilhafte Anwendung des erfindungsgemäßen pfostenförmigen Elements besteht darin, daß es ein Abdruckpfosten zur Bestimmung der Ausrichtung eines zahnmedizinischen Implantats ist.

Das erfindungsgemäße pfostenförmige Element wird nachfolgend anhand zweier Ausführungsbeispiele, die in der Zeichnung dargestellt sind, näher erläutert.

Es zeigt:
- Figur 1: ein Implantat mit einer eingeklipsten Verschlußkappe im Längsschnitt;
- Figur 2: eine Draufsicht auf die Verschlußkappe;
- Figur 3: eine Draufsicht auf das Implantat nach Entfernung der Verschlußkappe;
- Figur 4: einen Querschnitt entlang der Linie IV-IV durch das Implantat gemäß Figur 1;
- Figur S: einen Querschnitt entlang der Linie V-V durch das Implantat gemäß Figur 1;
- Figur 6: einen vergrößerten Ausschnitt des Eingriffsbereichs eines Clipelements;
- Figur 7: das Implantat mit einem eingeklipsten zweiteiligen Abdruckpfosten im Längsschnitt;
- Figur 7a: eine Draufsicht auf das Oberteil des Abdruckpfostens gemäß Figur 7;
- Figur 8: wie Figur 7, jedoch eines Laborimplantats;
- Figur 9: wie Figur 7, jedoch eines einteiligen Abdruckpfostens und
- Figur 10: wie Figur 9, jedoch eines Laborimplantats.

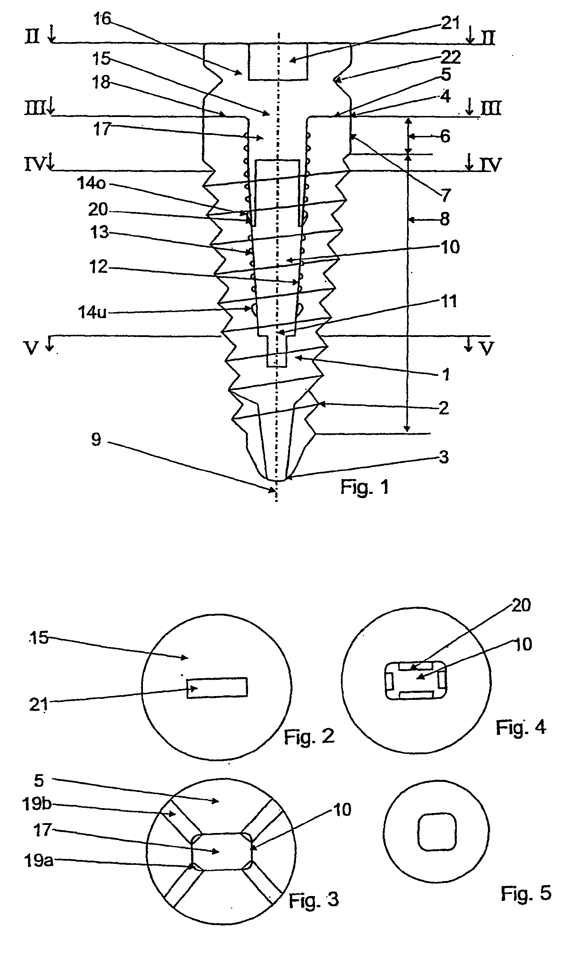

Den Figuren 1 bis 5 läßt sich ein aus Titan bestehendes Implantat 1 entnehmen, das eine ungefähr konische Grundform besitzt und an seiner äußeren Mantelfläche mit einem Außengewinde 2 versehen ist. Das Implantat 1 besitzt ein abgerundetes distales Ende 3 und ein proximales Ende 4, das von einer im wesentlichen kreisringförmigen Stirnfläche 5 gebildet wird. In einem an die Stirnfläche 5 angrenzenden Abschnitt 6 besitzt das Implantat 1 eine zylindrische Form mit einer hochglanzpolierten Mantelfläche 7. In einem darauf folgenden Gewindeabschnitt 8 ist das Implantat 1 konisch ausgeformt. Ausgehend von der Stirnfläche 5 erstreckt sich parallel zu einer Längsachse 9 des Implantats eine Aufnahmeausnehmung 10, die über die gesamte Länge des Abschnitts 6 sowie einen Teil der Länge des Gewindeabschnitts 8 verläuft.

Wie sich der Figur 3 entnehmen läßt, besitzt der Querschnitt der Aufnahmeausnehmung 10 im Bereich des Abschnitts 6 durchgängig die Form eines abgerundeten Rechtecks. Beginnend mit dem Gewindeabschnitt 8 verjüngt sich der Querschnitt der Aufnahmeausnehmung 10 dahingehend kontinuierlich, daß am Grund 11 der Aufnahmeausnehmung 10 der Querschnitt die Form eines abgerundeten Quadrats (vgl. Figur 5) aufweist. Der Übergang von der abgerundeten rechteckigen zur abgerundeten quadratischen Querschnittsform erfolgt kontinuierlich und ohne Sprünge.

Wie sich insbesondere der Figur 1 entnehmen läßt, ist die Wandung 12 der Aufnahmeausnehmung 10 mit einer Vielzahl von Ringnuten 13 versehen, die senkrecht zur Längsachse 9 ausgerichtet sind. Des weiteren ist die Wandung 12 mit einer oberen und einer unteren Ringnut 14o und 14u versehen, deren Funktion später erläutert wird.

In das in Figur 1 dargestellte Implantat 1 ist eine Verschlußkappe 15 eingesetzt, die aus einem ungefähr zylinderförmigen Kopfteil 16 und einem koaxial hierzu ausgerichteten Verbindungszapfen 17 besteht, der sich in die Aufnahmeausnehmung 10 erstreckt. Eine Kontaktfläche 18 des Kopfteils 16 kommt an der Stirnfläche 5 des Implantats 1 kraftschlüssig zur Anlage.

Wie sich der Figur 3 entnehmen läßt, weist der Verbindungszapfen 17 in einem oberen Abschnitt einen ungefähr rechteckförmigen Querschnitt auf, wobei die Eckbereiche derart gebrochen sind, daß in den Rundungsbereichen des Querschnitts der Aufnahmeausnehmung 10 zwischen dem Verbindungszapfen 17 und der Wandung 12 der Aufnahmeausnehmung 10 vier Entlüftungskanäle 19a gebildet werden. Beim Einschieben des Verbindungszapfens 17 in die Aufnahmeausnehmung 10 verdrängte Luft kann daher, ohne daß es zu einem den Montagevorgang behindernden Druckaufbau kommt, nach oben abgeführt werden, wobei die Luft durch vier radial nach außen verlaufende Entlüftungsnuten 19b, die in die Stirnfläche 5 des Implantats eingebracht sind und mit den Entlüftungskanälen 19a kommunizieren, nach außen entweichen kann.

Im Einbauzustand der Verschlußkappe 15 liegen die äußeren Mantelflächen des Verbindungszapfens 17 und die Wandung 12 der Aufnahmeausnehmung 10 sowie die Stirnfläche 5 und die Kontaktfläche 18 kraftschlüssig aneinander.

Da die Verschlußkappe 15 lediglich temporär nach der Implantation an dem Implantat 1 verbleibt, ist diese lediglich mit Hilfe von vier Clipelementen 20, die in die Ringnut 14o eingreifen, mit dem Implantat 1 verbunden. Anstelle des in Figur 1 gezeigten Eingriffs der Clipelemente 20 in die obere Ringnut 14o, ist bei einem entsprechend verlängerten Verbindungszapfen 17 auch ein Eingriff in die untere Ringnut 14u möglich.

Die Verschlußkappe 15 wird bereits vom Hersteller des Implantats 1 in dieses eingesetzt und dient einerseits dazu, das Implantat 1 nach Anfertigung einer entsprechenden Bohrung im Knochen mit Hilfe eines Schraubendrehers, der in den in Figur 2 gezeigten Schlitz 21 eingreift, einzudrehen. Aufgrund des annähernd rechteckförmigen Querschnitts des Verbindungszapfens 17 und der angepaßten Aufnahmeausnehmung 10 ist eine Drehmomenteinleitung über die Verschlußkappe 15 in das Implantat 1 möglich. Nach der Implantation verbleibt die Verschlußkappe 15 im Implantat 1, um zum anderen die Aufnahmeausnehmung 10 vor äußeren Verschmutzungen zu schützen.

Ca. 3 bis 6 Monate nach Einsetzen des Implantats 1 in den Kieferknochen ist die Einheilung soweit abgeschlossen, daß die die Verschlußkappe 15 abdeckende Schleimhaut in einer zweiten Operation wieder geöffnet werden kann. Die Verschlußkappe 15 wird entfernt, wozu mit Hilfe eines zangenartigen Werkzeugs in eine V-förmige Ringnut 22 in dem Kopfteil 16 eingegriffen wird und hierdurch die gesamte Verschlußkappe 15 durch einen leichten Ruck in axiale Richtung nach oben aus dem Implantat entfernt wird. In die Aufnahmeausnehmung 10 des Implantats 1 wird nunmehr ein Verbindungszapfen 17 eines sogenannten Gingiva-Formers eingesetzt, der in den Figuren nicht dargestellt ist. Das Befestigungsprinzip des Gingiva-Formers ist dasselbe wie bei der Verschlußkappe.

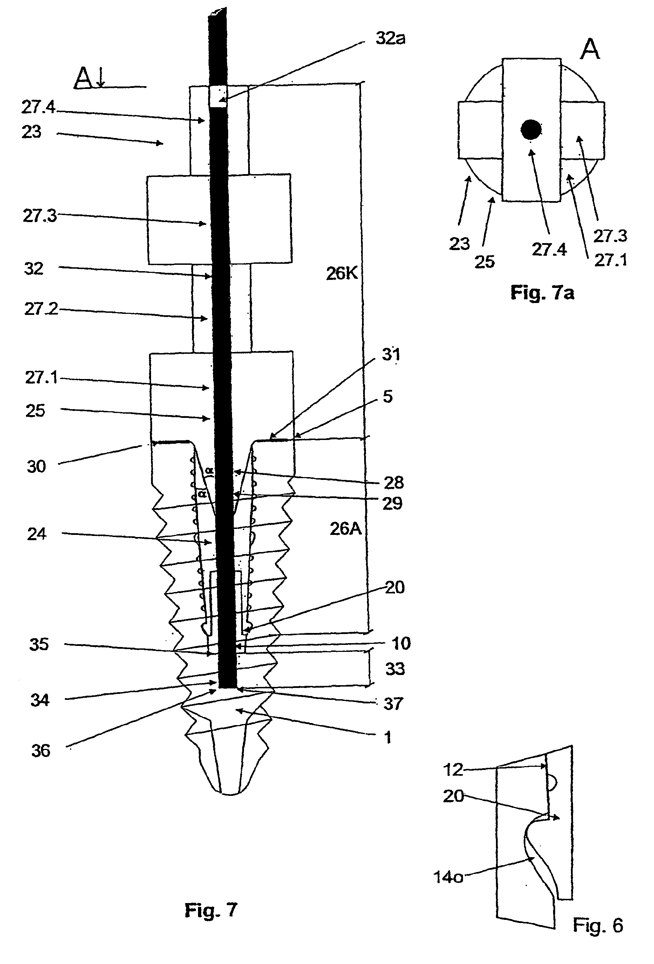

Um einen in dem Implantat 1 zu verankernden Ersatzzahn außerhalb des Mundraumes des Patienten an einem Modell des Kiefers anpassen zu können, wird ein Abdruck des Gebisses hergestellt. Zu diesem Zweck wird in die Aufnahmeausnehmung 10 des Implantats 1 ein in Figur 7 gezeigtes pfostenförmiges Element in Form eines Abdruckpfostens 23 eingesetzt. Der Abdruckpfosten 23 besteht aus einem mittels vier Clipelementen 20 in der Aufnahmeausnehmung 10 fixierbaren Unterteil 24 und einem in das Unterteil 24 verdrehsicher einsetzbaren Oberteil 25. Das Oberteil 25 steht mit einem Kragabschnitt 26K über den Öffnungsquerschnitt der Aufnahmeausnehmung 10 vor und ist seinerseits aus vier quaderförmigen Körpern 27.1 bis 27.4 zusammengesetzt. Der unterste Körper 27.1 weist einen kegelförmigen Endabschnitt 28 mit einem elliptischen Querschnitt auf, der in eine komplementär geformte Vertiefung 29 in dem Unterteil 24 des Abdruckpfostens 23 eingreift. Das Unterteil 24 schließt mit seiner Oberkante bündig mit der Stirnfläche 5 des Implantats 1 ab. Die Vertiefung 29 erstreckt sich unmittelbar von dem Niveau der Stirnfläche 5 aus und besitzt einen Öffnungsquerschnitt, der nur geringfügig kleiner als der Öffnungsquerschnitt der Aufnahmeausnehmung 10 in dem Implantat 1 selbst ist.

Wie sich der Draufsicht auf das Oberteil 25 des Abdruckpfostens 23 gemäß Figur 7a entnehmen läßt, sind die quaderförmigen Körper 27.1 bis 27.4, die einen rechteckförmigen Grundriß besitzen, abwechselnd um 90° zueinander verdreht, das heißt kreuzförmig getürmt, angeordnet.

Der unterste Körper 27.1 des Oberteils 25 des Abdruckpfostens 23 liegt mit einer kreisringförmigen Kontaktfläche 30 an der Stirnfläche 5 des Implantats 1 an, wobei zwecks sicherer Fixierung des Abdruckpfostens 23 an dem Implantat 1 an der Kontaktfläche 30 nach der spritzgußtechnischen Herstellung des Abdruckpfostens 23 ein dünner umlaufender Klebering 31 angebracht ist, der sich nach erfolgter Abformung mit einem leichten Ruck wieder von der Stirnfläche 5 des Implantats 1 ablösen läßt.

Ausgehend von der in Figur 7 dargestellten Verbindungsposition wird das Oberteil 25 des Abdruckpfostens 23 mit einer fließfähigen und aushärtenden Abdruckmasse umgeben. Nach der Aushärtung ist der Abdruckpfosten 23 ohne Zerstörung der formschlüssigen Verbindung nicht mehr aus der Abdruckmasse zu entfernen. Vielmehr wird der Abformlöffel, innerhalb dessen sich die Abdruckmasse befindet, zusammen mit dem Abdruckpfosten 23 entfernt, wobei die Klebeverbindung in Form des Kleberings 31 durch einen leichten Ruck aufgehoben wird. Aufgrund der im Querschnitt ellipsenförmigen Kegelverbindung zwischen dem Oberteil 25 und dem Unterteil 24 des Abdruckpfostens 23 läßt sich das Oberteil 25 linear in unterschiedliche Richtungen aus dem Implantat 1 bzw. dem zunächst zurückbleibenden Unterteil 24 entfernen. Die Grenzen der möglichen Bewegungsrichtungen werden durch die Mantelfläche des Kegels des Endabschnitts 28 bzw. der komplementären Vertiefung 29 definiert, wenn diese Mantelfläche gedanklich über die Stirnfläche 5 des Implantats 1 hinaus nach oben erweitert wird. Aufgrund der speziellen Verbindung des Unterteils 24 mit dem Oberteil 25 läßt sich letzteres auch dann spannungsfrei und ohne Kräfte auf die Abdruckmasse auszuüben aus dem Mundraum entfernen, wenn die Längsachse des Implantats 1 eine nicht unerhebliche Schiefstellung im Vergleich zu den benachbarten Zähnen aufweist.

Der in Figur 7 dargestellte Abdruckpfosten 23 weist eine durchgängige zentral angeordnete Durchgangsöffnung auf, in die ein daran angepaßtes Stabelement 32 eingesetzt ist. Das Stabelement 32, das sich durch sämtliche Körper 27.1 bis 27.4 erstreckt, dringt mit seinem distalen Endabschnitt 33 in eine daran angepaßte Sacköffnung 34 in dem Grund 35 der Aufnahmeausnehmung 10 ein. Zu diesem Zweck ist das Stabelement 32 in seinem distalen Endabschnitt im Durchmesser geringfügig verjüngt, wodurch die Einführbewegung erleichtert wird. Die Durchgangsöffnung für das Stabelement 32 erstreckt sich ebenfalls durch den Endabschnitt 28 des zylindrischen Körpers 27.1 sowie das Unterteil 24.

Zum einen läßt sich mit dem Stabelement 32 die korrekte Positionierung des Abdruckpfostens 23 kontrollieren und zwar, wenn hierzu im proximalen Endbereich des Stabelements 32 eine Markierung 32 a vorhanden ist, die im Falle einer korrekten Anlage der Kontaktfläche 30 des Körpers 27.1 an der Stirnfläche 5 des Implantats 1, gerade eben in der Durchgangsöffnung des obersten Körpers 27.4 eingetaucht ist. Alternativ hierzu kann die Markierung auch so angebracht sein, daß sie im zuvor beschriebenen Zustand gerade eben noch nicht in die Durchgangsöffnung eingetreten ist.

Ein anderer Vorteil des Stabelements 32 ist darin zu sehen, daß hierdurch der Abdruckpfosten 23 eine größere Stabilität erhält. Insbesondere wird verhindert, daß sich bei dem Abformvorgang, beispielsweise durch die Kraftwirkungen der Abdruckmasse, das Oberteil 25 des Abdruckpfostens 23 relativ zu dem Unterteil 24 verschieben kann.

Maßgeblich für die korrekte Position des Stabelements 32 ist der Eingriff des distalen Endabschnitts 33 in die angepaßte Sacköffnung 34 im Grund 35 der Aufnahmeausnehmung 10 und zwar in der Weise, daß eine distale Anschlagfläche 36 des Stabelements 32 mit einer Anschlag-fläche 37 am Grund der Sacköffnung 34 in Kontakt kommt.

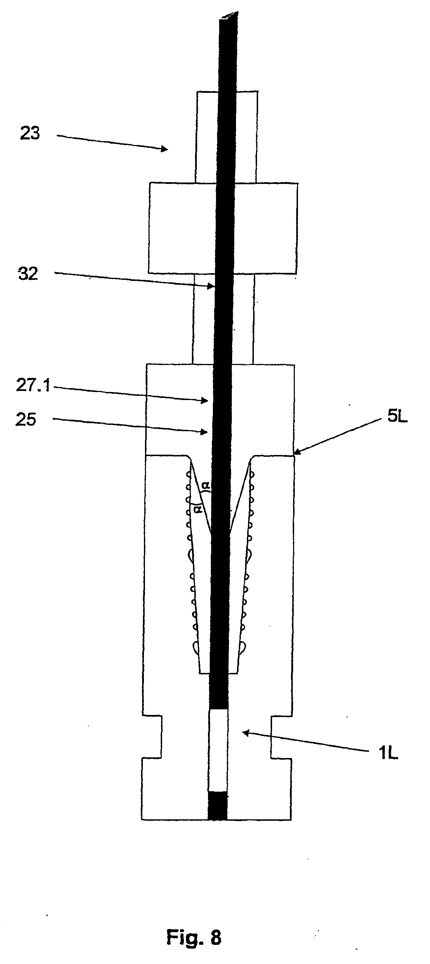

Figur 8 zeigt das Oberteil 25 des Abdruckpfostens 23 in einem Laborimplantat 1 L, dessen Aufnahmeausnehmung mit der des Implantats 1 identisch ist. Der unterste quaderförmige Körper 27.1 liegt mit seiner Anschlagfläche an der Stirnfläche 51, des Laborimplantats an. Mit Hilfe des Stabelements 32 läßt sich auch ohne das Unterteil 24 des Abdruckpfostens 23 eine Fixierung des Abdruckpfostens 23 in dem Laborimplantat, 1 L erreichen.

Zusätzlich dringt das Stabelement 32 mit seinem distalen Ende 33' in eine Bohrung 34' in den Grund 35' der Aufnahmeausnehmung 10' ein. Hierdurch wird die korrekte Verbindungsposition zwischen dem Laborimplantat 1 L und dem Abdruckpfosten 23 sichergestellt.

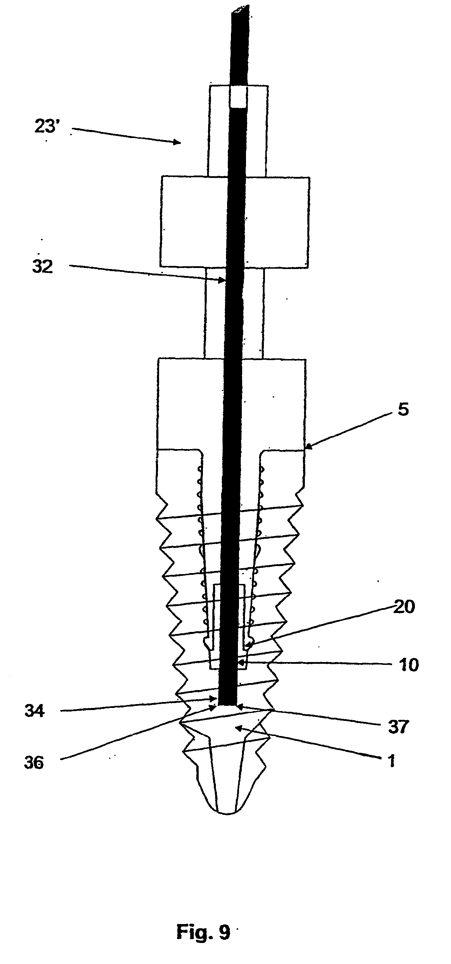

Figur 9 zeigt einen alternativen Abdruckpfosten 23', der einteilig ausgeführt ist und mit Clipelementen 20 an seinem distalen Ende in einer entsprechenden Ringnut in dem Implantat 1 befestigt werden kann. Aufgrund der Einteiligkeit des Abdruckpfostens 23' läßt sich dieser im wesentlichen nur in Richtung der Längsachse des Implantats 1 bzw. dessen Aufnahmeausnehmung 10 entfernen. Das Entfernen erfolgt mit Hilfe eines leichten Rucks, um die Formschlußkräfte der Clipverbindung zu überwinden.

Auch der Abdruckpfosten 23' ist mit einer zentralen Durchgangsöffnung versehen, in die das Stabelement 32 soweit eingeführt ist, daß es mit seiner distalen Anschlagfläche 36 an die entsprechende Anschlagfläche 37 auf dem Grund der Sackbohrung 34 anschlägt. Auf diese Weise kann der korrekte Sitz des Abdruckpfostens an der Stirnfläche 5 des Implantats 1, ohne Zuhilfenahme von Röntgenaufnahmen vor der Fertigung des Abdrucks, kontrolliert werden.

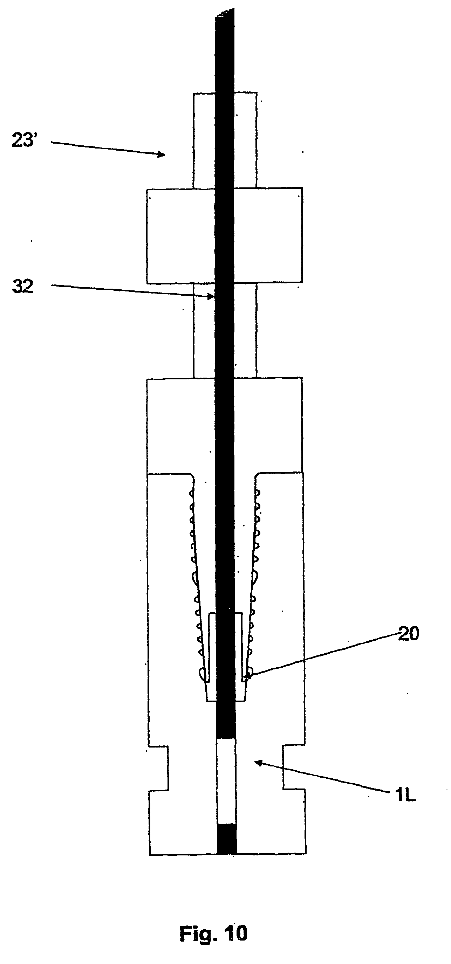

Figur 10 zeigt schließlich noch, wie der Abdruckpfosten 23' nach vollendeter Abformung in ein Laborimplantat 1 L eingesetzt ist. Auch hier erfolgt die Fixierung sowohl mit Hilfe der Clipelemente 20 als auch mit Hilfe des Stabelements 32.

## Patentansprüche

1. Einrichtung, aufweisend ein Implantat, ein Stabelement und ein pfostenförmiges Element zur Bestimmung der Ausrichtung des Implantats (1) relativ zu den dieses umgebenden Gewebestrukturen, wobei das pfostenförmige Element mit einem Aufnahmeabschnitt (26A) in eine angepasste Aufnahmeausnehmung (10) im Implantat (1) einbringbar, darin fixierbar und wieder daraus entfernbar ist und in einer Verbindungsposition mit einem Kragabschnitt (26K) über einen Öffnungsquerschnitt der Aufnahmeausnehmung (10) vorsteht, wobei das pfostenförmige Element eine in Richtung seiner Längsachse verlaufende Durchgangsöffnung aufweist, durch die das Stabelement (32) hindurchführbar ist, **dadurch gekennzeichnet, dass** eine distale Anschlagfläche (36) des Stabelements (32) mit einer Anschlagfläche (37) des Implantats (1) auf dem Grund der Aufnahmeausnehmung (10) des Implantats (1) in Kontakt bringbar und damit die korrekte Position des pfostenförmigen Elements in Bezug auf das Implantat feststellbar ist.

2. Einrichtung nach Anspruch 1, **dadurch gekennzeichnet, dass** die Durchgangsöffnung und die Aufnahmeausnehmung (10) koaxial zueinander verlaufen.

3. Einrichtung nach Anspruch 1 oder 2, **dadurch gekennzeichnet, dass** das Stabelement (32) mit einem distalen Endabschnitt (33) in eine im Querschnitt angepasste Sacköffnung (34) in dem Grund der Aufnahmeausnehmung (10) einführbar ist.

4. Einrichtung nach Anspruch 3, **dadurch gekennzeichnet, dass** die Sacköffnung (34) sich im Bereich ihres Eintrittsquerschnitts geringfügig erweitert und/oder das Stabelement (32) sich in einem distalen Endabschnitt (33) im Durchmesser geringfügig verjüngt.

5. Einrichtung nach einem der Ansprüche 1 bis 3, **dadurch gekennzeichnet, dass** eine proximale Stirnfläche im rechten Winkel zu der Längsachse des Stabelements (32) verläuft.

6. Einrichtung nach einem der Ansprüche 1 bis 5, **dadurch gekennzeichnet, dass** das Stabelement (32) an seiner äußeren Mantelfläche mit einer Markierung versehen ist, die im Falle einer korrekten Position des pfostenförmigen Elements in bezug auf das Implantat (1) und bei Kontakt der Anschlagflächen (36, 37) des Stabelements (32) und des Implantats (1) aneinander gerade vollständig in die Durchgangsöffnung eingetaucht ist oder sich gerade unmittelbar oberhalb des Öffnungsquerschnitts der Durchgangsöffnung befindet.

7. Einrichtung nach einem der Ansprüche 1 bis 6, **dadurch gekennzeichnet, dass** es ein Abdruckpfosten (23, 23') zur Bestimmung der räumlichen Position eines zahnmedizinischen Implantats (1) ist.

## Claims

1. Device, comprising an implant, a rod element and a post-shaped element for determining the orientation of the implant (1) relative to the tissue structures surrounding it, wherein the post-shaped element with a receiving section (26A) can be introduced into an adapted receiving recess (10) in the implant (1), can be fixed therein and removed again therefrom and projects, in a connection position, with a cantilever section (26K) over an opening cross section of the receiving recess (10), the post-shaped element having a through-opening running in the direction of its longitudinal axis, through which the rod element (32) can be guided, **characterised in that** a distal stop face (36) of the rod element (32) can be brought into contact with a stop face (37) of the implant (1) on the base of the receiving recess (10) of the implant (1) and the correct position of the post-shaped element with respect to the implant can thus be determined.

2. Device according to claim 1, **characterised in that** the through-opening and the receiving recess (10) extend coaxially to one another.

3. Device according to claim 1 or 2, **characterised in that** the rod element (32) with a distal end section (33) can be introduced into a blind opening (34), which is adapted with regard to cross section, in the base of the receiving recess (10).

4. Device according to claim 3, **characterised in that** the blind opening (34) widens slightly in the region of its entry cross section and/or the rod element (32) tapers slightly with regard to diameter in a distal end section (33).

5. Device according to any one of claims 1 to 3, **characterised in that** a proximal end face runs at a right angle to the longitudinal axis of the rod element (32).

6. Device according to any one of claims 1 to 5, **characterised in that** the rod element (32) is provided at its outer surface area with a marking, which, in the case of a correct position of the post-shaped element with respect to the implant (1) and on contact of the stop faces (36, 37) of the rod element (32) and the implant (1) against one another is just completely inserted in the through-opening or is located just directly above the opening cross section of the through-opening.

7. Device according to any one of claims 1 to 6, **characterised in that** it is an impression post (23, 23') to determine the spatial position of a dental implant (1).

## Revendications

1. Dispositif comportant un implant, un élément en barreau et un élément en forme de poteau pour déterminer l'orientation de l'implant (1) par rapport aux structures tissulaires entourant celui-ci, l'élément en forme de poteau étant susceptible d'être inséré par une portion de logement (26A) dans un évidement de logement adapté (10) dans l'implant (1) pour y être fixé et pour être enlevé hors de celui-ci, et dépassant au-delà d'une section transversale d'ouverture de l'évidement de logement (10) dans une position de liaison avec une portion de collier (26K), l'élément en forme de poteau présentant une ouverture traversante s'étendant en direction de son axe longitudinal, à travers laquelle peut s'étendre l'élément en barreau (32), **caractérisé en ce qu'**une surface de butée distale (36) de l'élément en barreau (32) est susceptible d'être amenée en contact avec une surface de butée (37) de l'implant (1) au fond de l'évidement de logement (10) de l'implant (1) et ainsi la position correcte de l'élément en forme de poteau est susceptible d'être fixée par rapport à l'implant.

2. Dispositif selon la revendication 1, **caractérisé en ce que** l'ouverture traversante et l'évidement de logement (10) s'étendent coaxialement l'un par rapport à l'autre.

3. Dispositif selon la revendication 1 ou 2, **caractérisé en ce que** l'élément en barreau (32) est susceptible d'être inséré par une portion d'extrémité distale (33) dans une ouverture borgne (34) de section transversale adaptée prévue au fond de l'évidement de logement (10).

4. Dispositif selon la revendication 3, **caractérisé en ce que** l'ouverture borgne (34) va en s'élargissant légèrement dans la zone de sa section transversale d'entrée, et/ou **en ce que** l'élément en barreau (32) va en se rétrécissant légèrement quant à son diamètre dans une portion d'extrémité distale (33).

5. Dispositif selon l'une des revendications 1 à 3, **caractérisé en ce qu'**une surface frontale proximale s'étend à angle droit par rapport à l'axe longitudinal de l'élément en barreau (32).

6. Dispositif selon l'une des revendications 1 à 5, **caractérisé en ce que** l'élément en barreau (32) est pourvu d'un marquage sur sa surface enveloppe extérieure, qui, dans le cas d'une position correcte de l'élément en forme de poteau par rapport à l'implant (1) et lors d'un contact des surfaces de butée (36, 37) de l'élément en barreau (32) et de l'implant (1) l'une contre l'autre, est plongée justement complètement dans l'ouverture traversante ou se trouve justement directement au-dessus de la section transversale de l'ouverture traversante.

7. Dispositif selon l'une des revendications 1 à 6, **caractérisé en ce qu'**il est un poteau d'empreinte (23, 23') pour déterminer la position dans l'espace d'un implant dentaire (1).
